(19) Europäisches Patentamt / European Patent Office / Office européen des brevets

(11) **EP 4 422 126 A1**

(12) **EUROPEAN PATENT APPLICATION**

(43) Date of publication:
**28.08.2024 Bulletin 2024/35**

(21) Application number: **23305221.6**

(22) Date of filing: **21.02.2023**

(51) International Patent Classification (IPC):
**H04L 9/32** *(2006.01)* **H04L 9/30** *(2006.01)*

(52) Cooperative Patent Classification (CPC):
**H04L 9/3247; H04L 9/3093;** H04L 2209/046

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **THALES DIS FRANCE SAS**
**92190 Meudon (FR)**

(72) Inventors:
• **BERZATI, Alexandre**
  **13710 FUVEAU (FR)**
• **CALLE VIERA, Andersson**
  **13100 Aix en Provence (FR)**

(74) Representative: **Bricks, Amélie**
**Thales Dis France SAS**
**Intellectual Property Department**
**6, rue de la Verrerie**
**92190 Meudon (FR)**

(54) **METHOD FOR OPTIMIZING AN EXECUTION OF A GENERATION OF A CRYSTALS-DILITHIUM POST-QUANTUM SIGNATURE**

(57)     The present invention relates to a method method for optimizing the execution of the generation of a Crystals-Dilithium post-quantum digital signature $\sigma = (\tilde{c}, z, h)$ of a message M with a secret key sk = $(\rho, K, tr, s1, s2, t0)$ where $\rho$, K, $tr$ are 256 bits binary values, $s1$ and $s2$ are vectors of length l, respectively k, of elements of the ring Rq whose coefficients are lower than a first predetermined value $\eta$, and **t0** is a polynomial vector of length k with k, l, n and q integers, said Crystals-Dilithium post-quantum digital signature generation comprising :
a) generating (S1) a masking vector **y**, of length l, of polynomials with coefficients less than a second predetermined value $\gamma 1$,
b) computing (S2) a first vector of polynomials, of length k, **w = Ay,** where **A** is a k $\times$ l matrix each of whose entries is a polynomial in the ring Rq = Zq[X]/(Xn + 1),
c) determining (S3) a second vector of polynomials **w1** and a third vector of polynomials **w0,** both of length k, where every polynomial coefficient $\mathbf{w}^i$ in **Ay,** with i in 0, ..., k-1, is written as $\mathbf{w}^i = \mathbf{w1}^i \cdot 2\gamma2 + \mathbf{w0}^i$ where $|\mathbf{w0}^i| \leq \gamma2$ with $\gamma2$ a third predetermined value,
d) generating (S4) a challenge c based on the message and the second vector of polynomials **w1,**
e) performing rejection tests (S5) comprising testing if test vectors generated from said vectors, said challenge and said secret key fulfill predetermined conditions, and when said conditions are not fulfilled, restarting the signature generation from step a), else generating said signature, the steps a), b), c), d), and e) being repeated until the conditions are satisfied,
wherein performing rejection tests (S5) comprises :
- following said determination of said third vector of polynomials **w0,** generating a first test vector **r0** as **w0**-cs2,

and checking whether said first test vector **r0** fulfills a first condition,
- when said first condition is met, generating a second test vector **z= y + cs1**, and checking whether said second test vector **z** fulfills a second condition, and wherein, when said second condition is met, said signature is generated from said second test vector.

[Fig. 3a]

**Description**

**FIELD OF THE INVENTION**

The present invention relates to the field of cryptographic schemes, and of associated cryptographic devices, and more particularly to improvements to Dilithium lattice-based calculation scheme.

**BACKGROUND OF THE INVENTION**

The increasing computational power of quantum computers is a growing threat to the security of classical cryptographic schemes such as RSA or ECDSA. Such schemes will eventually be completely defenseless against attacks performed using quantum computers. Therefore, work is being done to develop new efficient schemes that would be resistant against such attacks.

Lattice based schemes have been proved resistant to quantum computer attacks. Among this class of schemes, Dillithium and Kyber have been selected by the NIST to become Post-Quantum Cryptography standards for supporting respectively signature and encryption.

Dilithium scheme has a footprint which can be as high as about 30 kByte of memory per call. In addition, the memory footprint of the scheme increases with the security level of the scheme, up to level 5. This footprint is expected to keep increasing because of future updates.

Such a footprint is about 4 times the one of RSA cryptographic scheme. It may be hard to accommodate on computing systems with low resources, especially systems without NVM dedicated to their crypto engines, which may have no more than 48 kB of RAM for the system microcode, the crypto engine and user data.

Consequently, there is a need to improve Dilithium scheme efficiency by decreasing its memory footprint.

**SUMMARY OF THE INVENTION**

For this purpose and according to a first aspect, this invention therefore relates to a method for optimizing the execution of the generation of a Crystals-Dilithium post-quantum digital signature $\sigma = (\tilde{c}, z, h)$ of a message M with a secret key sk = $(\rho, K, tr, s1, s2, \mathbf{t0})$ where $\rho$, K, $tr$ are 256 bits binary values, $s1$ and $s2$ are vectors of length l, respectively k, of elements of the ring Rq whose coefficients are lower than a first predetermined value $\eta$, and $\mathbf{t0}$ is a polynomial vector of length k with k, l, n and q integers,

said Crystals-Dilithium post-quantum digital signature generation comprising :

      a) generating a masking vector **y**, of length l, of polynomials with coefficients less than a second predetermined value $\gamma 1$,
      b) computing a first vector of polynomials, of length k, **w = Ay,** where **A** is a k $\times$ l matrix each of whose entries is a polynomial in the ring Rq = Zq[X]/(Xn + 1),
      c) determining a second vector of polynomials **w1** and a third vector of polynomials **w0,** both of length k, where every polynomial coefficient **w'** in **Ay,** with i in 0, ..., k-1, is written as $\mathbf{w^i} = \mathbf{w1^i} \cdot 2\gamma 2 + \mathbf{w0^i}$ where $|\mathbf{w0^i}| \leq \gamma 2$ with $\gamma 2$ a third predetermined value,
      d) generating a challenge c based on the message and the second vector of polynomials **w1**,
      e) performing rejection tests comprising testing if test vectors generated from said vectors, said challenge and said secret key fulfill predetermined conditions,

and when said conditions are not fulfilled, restarting the signature generation from step a), else generating said signature,
the steps a), b), c), d), and e) being repeated until the conditions are satisfied,
said method being performed by a cryptographic device comprising a processor and a memory, and
wherein performing rejection tests comprises :

      - following said determination of said third vector of polynomials **w0,** generating a first test vector **r0** as **w0-**$cs2$, and checking whether said first test vector **r0** fulfills a first condition,
      - when said first condition is met, generating a second test vector **z=** y + $cs1$, and checking whether said second test vector **z** fulfills a second condition, and wherein, when said second condition is met, said signature is generated from said second test vector.

By doing so, at least the first test vector **r0** may be discarded from memory before computing the second test vector **z**, which enables to decrease the memory footprint of the signature generation process.

According to an embodiment, generating either said first or second test vector and checking whether said test vector fulfills a condition may comprise generating polynomial coefficients of said test vector one by one and may comprise, after one polynomial coefficient of said vector has been generated, checking whether said polynomial coefficient fulfills a condition before generating next polynomial coefficient of said test vector.

By doing so, only one coefficient of the test vectors is stored at a time instead of storing the full vectors before testing them.

The method according to the first aspect may comprise storing coefficients of the second test vector **z$^i$** fulfilling the second condition into a packed format before using them for the generation of the signature.

It enables to decrease the memory footprint of the coefficients of the second test vector while keeping these values available for generating the signature.

The method according to the first aspect may comprise storing coefficients of the second vector of polynomials **w1'** into a packed format after their generation.

As an example, n=256 and q=2^23-2^13 +1.

According to a second aspect, this invention therefore relates also to a computer program product directly loadable into the memory of at least one computer, comprising software code instructions for performing the steps of the method according to the first aspect when said product is run on the computer.

According to a third aspect, this invention therefore relates also to a cryptographic device comprising a processor and a memory configured for performing the steps of the method according to the first aspect.

## BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

- Figure 1 is a schematic illustration of a cryptographic device according to an embodiment of the present invention;
- Figure 2 is a schematic illustration of the key generation, signature generation and signature verification processes of the Dilithium cryptographic scheme;
- Figures 3a and 3b are schematic illustrations of the signature generation according to an embodiment of the present invention;
- Figure 4 illustrates schematically an example of the signature generation according to an embodiment of the present invention;
- Figures 5 and 6 are a schematic illustration of the supporting algorithms for the Dilithium cryptographic scheme;
- Figure 7 illustrates schematically another example of the signature generation according to an embodiment of the present invention.

## DETAILED DESCRIPTION OF EMBODIMENTS OF THE INVENTION

The invention relates to methods, and associated devices, for optimizing the execution of the generation of a Crystals-Dilithium post-quantum digital signature $\sigma$ of a message M with a secret key sk.

The methods, and associated devices, described here below are improvements of the existing implementation of Crystals-Dilithium signature scheme described in "CRYSTALS-Dilithium Algorithm specifications and supporting documentation (Version 3.1)" by S. Bai, L. Ducas, E. Kiltz, T. Lepoint, V. Lyubashevsky, P. Schwabe, G. Seiler and D. Stehlé, February 2021.

In the rest of this document, as in the reference cited above:

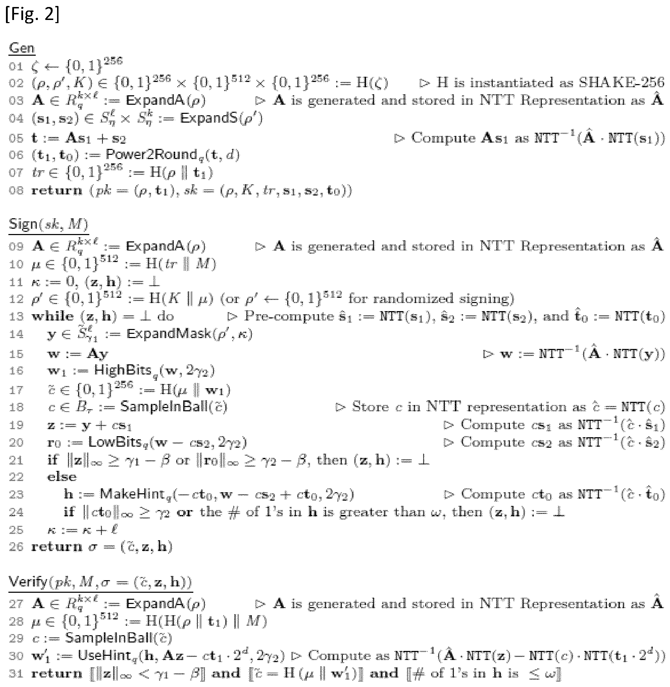

- The secret key sk is equal to ($\rho$, K, *tr, s1, s2,* **t0**) where $\rho$, K and *tr* are 256 bits binary values and **t0** is a polynomial vector of length k with k an integer. Details of the generation of the secret key can be found in the reference document cited above and are reproduced on Figure 2.
- *s1* and *s2* are vectors of length l, respectively k, of elements of the ring Rq = Zq[X]/(Xn + 1), with l, n and q integers, whose coefficients are lower than a first predetermined value $\eta$, the ensembles of such vectors are noted $S_\eta^l$ and $S_\eta^k$ .
- **A** is a k $\times$ l matrix each of whose entries is a polynomial in the ring Rq. It is generated from the first element $\rho$ of the secret key sk by a matrix expansion using an extendable output function such as Keccak hash function. It may for example be SHAKE-128 or SHAKE-256. Alternatively, it may be AES-128 or AES-256.

- A vector of polynomials **w**, of length k, hereafter called "first vector of polynomials", is generated from the matrix **A** and from a random masking vector **y**, of length l, of elements of the ring Rq whose coefficients are lower than a second predetermined value $\gamma 1$, with **w=Ay.**
- The first vector of polynomials **w** may be decomposed into a second vector of polynomials **w1** and a third vector of polynomials **w0** such that every polynomial coefficient **w'** in Ay, with i in {0, ..., k-1}, is written as **w' = w1$^i$** . $2\gamma 2$ + **w0'** where $|\mathbf{w0^i}| \leq \gamma 2$ with $\gamma 2$ a third predetermined value.
- A challenge c is generated from the message to be signed M and from the second vector of polynomials **w1;** it is stored under a compressed format as $\tilde{c}$.
- Another vector of polynomials z is generated as equal to **y** + *cs1*.
- A last vector of polynomials **h,** hereafter called "fourth vector of polynomials", is generated from the challenge c, the secret key sk and some of the other values listed above.

As an example, n may be chosen as equal to 256 and q equal to 2^23-2^13 +1 ("^" being the exponentiation operator). Integers k and I defining the size of the matrix **A** may be chosen depending on the desired security level of the cryptographic process.

The signature $\sigma$ to be generated is defined as ($\tilde{c}$, **z**, **h**).

Such a signature generation may be performed by a cryptographic device 100. Such a device may for example be a personal computer or a server. It may also be a tamper-proof device such as a Hardware Security Module HSM. It may also be a smaller device such as a smartchip.

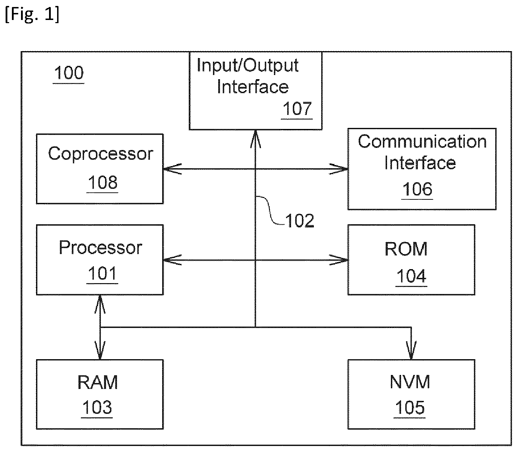

**Figure 1** is a schematic illustration of such a cryptographic device 100. It may include a processor 101 connected via a bus 102 to a random access memory (RAM) 103, a read-only memory (ROM) 104, and/or a non-volatile memory (NVM) 105. It may further include a communication interface 106 connected to the bus and which may be used to connect the device to various forms of wireless networks, e.g., wide-area networks, WiFi networks, or mobile telephony networks, or to wired networks such as an Ethernet network. It may also include an input-output interface 107 providing interfaces to an administrator, such as one or more screens, loudspeakers, a mouse, tactile surfaces, a keyboard etc... The cryptographic device may further include a coprocessor 108. This coprocessor may perform some of the operations to be performed in the frame of the execution of the signature process. For example, it may be a hardware accelerator, such as a FPGA or an ASIC. This coprocessor may be a separate chip in the cryptographic device or it may be included with the processor in a SoC. As an example, such a coprocessor may be used to compute polynomial multiplications or to perform matrix expansion.

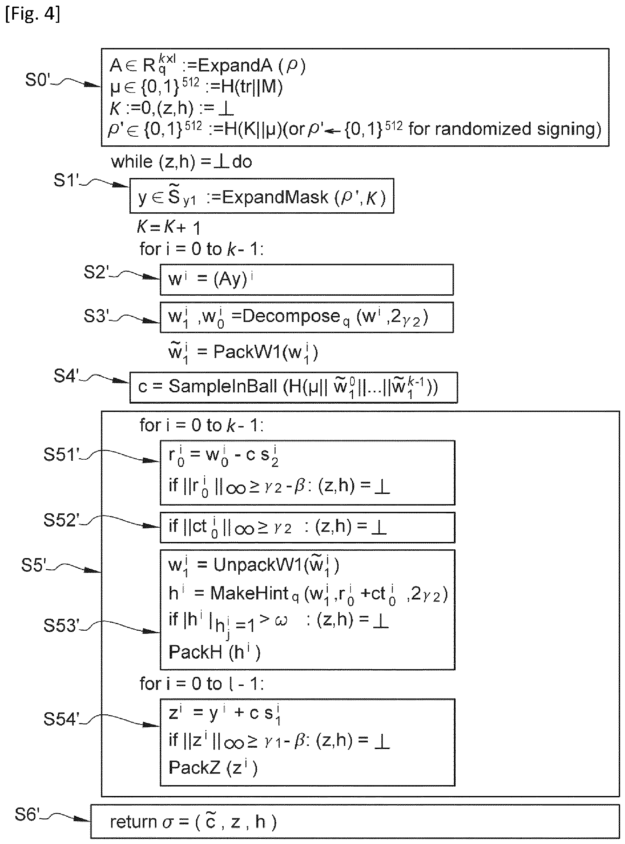

The signature generation processes of the scheme described in "CRYSTALS-Dilithium Algorithm specifications and supporting documentation (Version 3.1)" by S. Bai, L. Ducas, E. Kiltz, T. Lepoint, V. Lyubashevsky, P. Schwabe, G. Seiler and D. Stehlé, February 2021 (Figure 4) is reproduced here on **Figure 2.**

In order to ensure the security of the generated signature, this signature generation process performs rejection sampling. Candidate signature elements are generated and subjected to rejection tests. Each time one of these tests fails, the candidate signature is rejected and new candidate signature elements are generated until all rejection tests are fulfilled.

More precisely, the algorithm of Figure 2 comprises simultaneous tests on the polynomial vector **z**, which is the second element of the signature to be generated, and on another polynomial vector **r0**, on line 21 of the signature algorithm. In the rest of the description, the polynomial vector **r0** will be called the first test vector and the polynomial vector **z** will be called the second test vector; then, if this test succeeds, another test is performed, on line 24, simultaneously on the fourth vector of polynomials h and on the value *c***t0** with c the previously generated challenge and **t0** the last element of the secret key sk.

In order to generate the values to be tested in these tests, several values have to be generated and stored in memory, namely:

- the masking vector **y** of length I, needed to compute the second test vector **z**,
- the first vector of polynomials **w** of length k, needed to compute the first test vector **r0** and the fourth vector of polynomials **h**,
- the challenge c, needed to compute the first test vector **r0** and the value ct0, and the first signature part $\tilde{c}$,
- the first test vector **r0** of length k,
- the second test vector **z** of length I.

Assuming that each coefficient of a polynomial occupies in memory a 32-bits memory word, and that n=256, each polynomial occupies 1 kByte. Assuming a size of also 1kB for the challenge c, it leads to a global memory footprint of up to 2*I +3*k +1 kB.

In order to decrease this footprint, a first idea of the method according to the invention is to perform the tests on the first test vector **r0** and on the second test vector z separately. Indeed, the evaluation of the norms of **r0** and **z**, to be compared to thresholds, are totally independent. This property was part of the correctness demonstration of Dilithium in "S. Bai, L. Ducas, E. Kiltz, et al., CRYSTALS - Dilithium: Digital signatures from module lattices", 2021, 38. As a result, it is possible to generate the first test vector **r0** and check if it fulfills the appropriate condition before computing the second test vector **z**. Since the second test vector is equal to **y** + cs1, it is not computed from either the third vector of polynomials **w0** or the first test vector **r0.** These two vectors are not part of the signature either. Therefore, it becomes possible to discard them from the memory before computing the second test vector **z**, which leads to a great decrease of the amount of memory concurrently occupied by the signature process. Similarly, the vector *s2* and the value *cs2* are not used anymore after the first test vector **r0** has passed its test and they can be discarded before computing the second test vector **z**.

A second idea of the method according to the invention is to perform the tests on the first test vector **r0** and on the second test vector **z** coefficient by coefficient, instead of performing it on the whole vectors. As a result, there is no need any more to keep the whole tests vectors available in memory. Instead of storing vectors of size k kB and l kB, only one 1 kB-coefficient is stored at the same time for each vector.

A third idea of the method according to the invention is to store more values under a compressed format, also called packed format. Compressed values are noted using a ~. In the reference algorithm of Figure 2, only the challenge c is stored into a compressed format, noted $\tilde{c}$, before the end of the signature generation process. The fourth vector of polynomials **h** and the second vector of polynomials **w1** are also compressed but only at the end of the process. The method according to the invention suggests turning into a compressed format, before the end of the signature generation process, other values used in the signature generation process:

- after it has passed the appropriate test, each coefficient of the fourth vector of polynomials **h**,
- after it has passed the appropriate test, each coefficient of the second test vector **z**,
- right after it has been generated, each coefficient $\mathbf{w1^i}$ of the second vector of polynomials **w1.**

It enables to offload from the memory the unpacked version of these values. Assuming a compression factor around 0,5, it enables to save around k/2 kB of memory from the storage of the second vector of polynomials **w1**, l/2 kB from the storage of the second test vector **z.** For the storage of the fourth vector of polynomials h, a higher compression factor may even be achieved, up to 0,9.

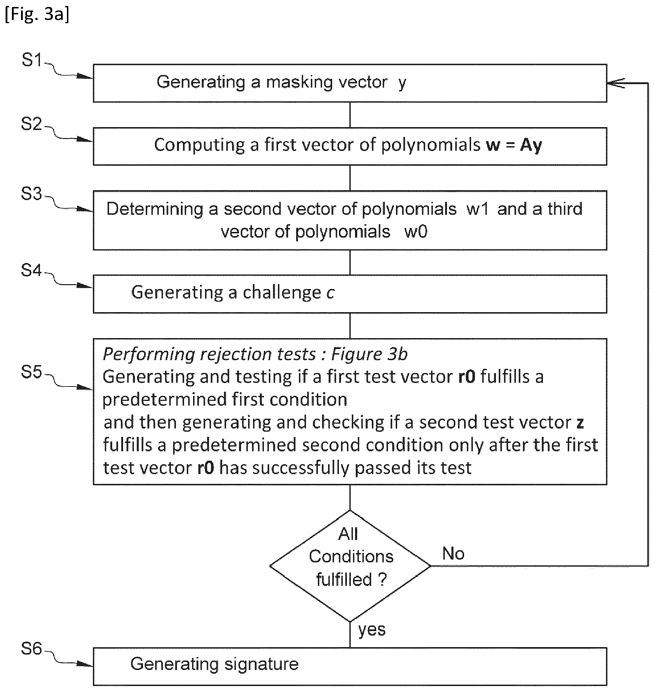

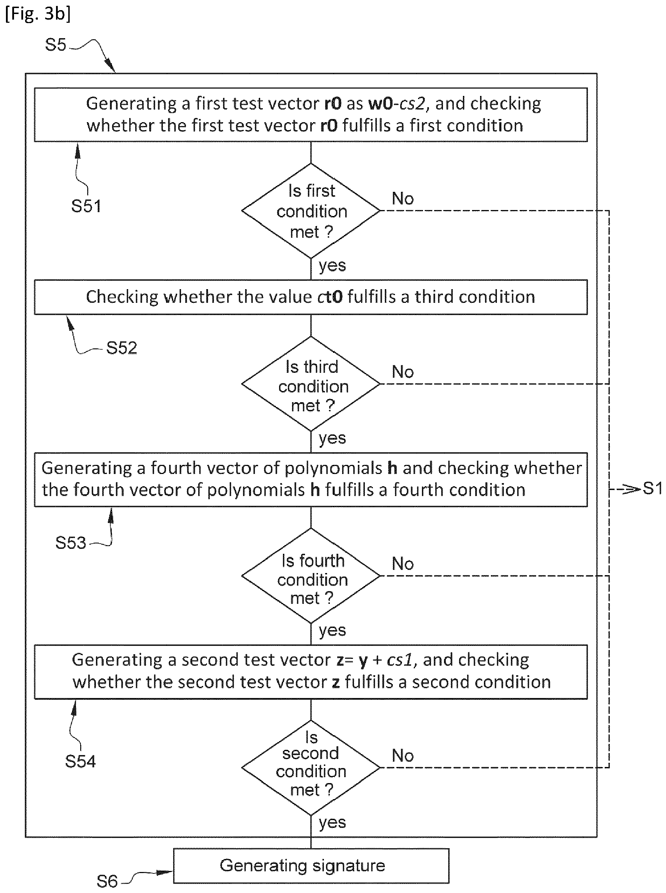

The following paragraphs describe with more details the steps of the method according to the invention for generating a signature $\sigma = (\tilde{c}, \mathbf{z}, \mathbf{h})$ of a message M as described in **Figures 3a and 3b.**

In a first step S1, the cryptographic device generates the masking vector **y**.

In a second step S2, the cryptographic device computes the first vector of polynomials **w = Ay.**

In a third step S3, the cryptographic device determines the second vector of polynomials **w1** and the third vector of polynomials **w0** corresponding to the first vector of polynomials **w**, such that every polynomial coefficient **w'** in **Ay**, with i in 0, ..., k-1, is written as $\mathbf{w'} = \mathbf{w1^i} . 2\gamma2 + \mathbf{w0'}$ where $|\mathbf{w0^i}| \leq \gamma2$

In a fourth step S4, the cryptographic device generates the challenge c based on the message M and the second vector of polynomials **w1.**

Then, the cryptographic device performs rejection tests, in a fifth step S5 in order to determine if the masking vector **y** generated in the first step enables the generation of a secure signature. These rejection tests comprise at least testing if the first test vector **r0** and then the second test vector **z** fulfill predetermined conditions. The cryptographic device may perform additional tests in the fifth step S5, such as the test on the value *ct0* and the test on the fourth vector of polynomials h described below.

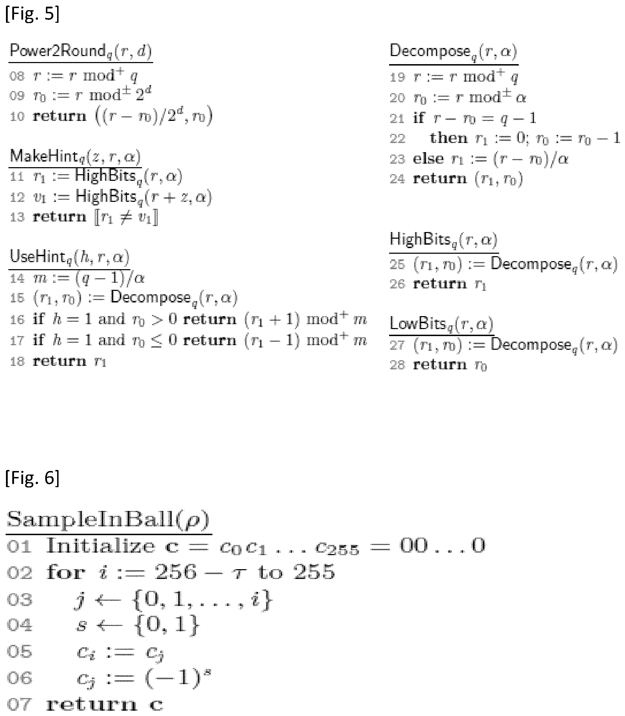

More precisely, in a first sub-step S51 of the fifth step S5, following the determination of the third vector of polynomials **w0**, the cryptographic device generates the first test vector **r0** as **w0-**cs2, and checks whether the first test vector **r0** fulfills a first condition. The first test vector **r0** may also be generated as Decompose$_q$(**w-**cs2, 2 $\gamma$2), the function Decompose$_q$ being defined on **Figure 5.** Since the third vector of polynomials **w0** is not used anymore in subsequent steps of the signature generation process, it may be discarded from the memory at the end of the first sub-step S51, before starting the next step.

In a second sub-step S52, when the first test vector **r0** fulfills the first condition, the cryptographic device may check if the value *ct0* verifies a third condition.

In a third sub-step S53, when the value *ct0* verifies the third condition, the cryptographic device generates the fourth vector of polynomials **h**, based on the second vector of polynomials **w1**, on the first test vector **r0** and on the value *ct0*, and may check if the fourth vector of polynomials **h** verifies a fourth condition.

Since the first test vector **r0** is not used anymore in subsequent steps of the signature generation process, it may be discarded from the memory at the end of the third sub-step S53, before starting the next step.

Then, in a fourth sub-step S54, when said first, third and fourth conditions are met, the cryptographic device generates the second test vector **z= y** + *cs1,* and checks whether the second test vector **z** fulfills a second condition.

In a sixth step S6, when said first, second, third and fourth conditions are met, the second test vector **z** and the fourth vector of polynomials **h** may be used respectively as second and third elements of the signature to be generated and the signature is generated from the packed challenge $\tilde{c}$, from said second test vector **z**, and from the fourth vector of polynomials **h**.

The signature may comprise the second test vector **z** and the fourth vector of polynomials **h** under a compressed format, noted respectively $\tilde{z}$ and $\tilde{h}$. In such a case the signature is equal to $(\tilde{c}, \tilde{z}, \tilde{h})$. In the present description and in the figures, the notation $\sigma = (\tilde{c}, \mathbf{z}, \mathbf{h})$ may be used for designated the signature comprising either compressed or uncompressed second test vector **z** and fourth vector of polynomials **h**. If any of these two vectors is only available under a compressed format at the beginning of the sixth step but needed under an uncompressed format for issuing the signature, the sixth step may comprise uncompressing it.

If any of the first, second, third and fourth conditions is not fulfilled at the first, second, third or fourth sub-steps, the cryptographic device restarts the signature generation at the first step, all steps and sub-steps from the first step to the fifth step being repeated until all conditions are satisfied and a signature is generated.

Detailed exemplary implementations of the computations performed in all steps are given below.

In addition to decreasing the memory footprint of the signature generation process, such a way of performing rejection sampling, first on the first test vector **r0**, and then on the second test vector **z**, also enables to decrease the whole computation time of the signature generation. Indeed, the second test vector **z** is only computed after the first test vector **r0** has successfully passed its test. Therefore, if other first test vectors **r0** have been generated and rejected before one passes the test, no second test vector **z** has been generated for these rejected first test vectors **r0**.

In an embodiment, generating either said first or second test vector and checking whether said test vector fulfills a condition may comprise generating polynomial coefficients of said test vector one by one and may comprise, after one polynomial coefficient of said vector has been generated, checking whether said polynomial coefficient fulfills a condition before generating next polynomial coefficient of said test vector.

By doing so, there is no need any more to keep all coefficients of the first test vector **r0** available in memory at the same time. Similarly, there is no need any more to keep all coefficients of the second test vector **z** available in memory at the same time. They can be generated and processed one at a time, and then offloaded from the memory before generating the next one.

Such a computation and processing of vector coefficients one at a time may also be applied to the masking vector **y**, the first vector of polynomials **w**, the second vector of polynomials **w1**, the third vector of polynomials **w0**, the fourth vector of polynomials **h**, and to the testing of the value $ct0$. Examples will be provided here after.

In an embodiment, the cryptographic device stores coefficients of the second test vector $\mathbf{z}^i$ with i in {0, ..., l-1} fulfilling the second condition into a packed format before using them for the generation of the signature. By doing so, the unpacked version of each coefficient can be discarded after it has successfully passed its test, as described in the previous paragraph, while still storing the value of the coefficient, under packed format.

Similarly, the cryptographic device may store coefficients of the fourth vector of polynomials $\mathbf{h}^i$ with i in {0, ..., k-1} fulfilling the fourth condition into a packed format before using them for the generation of the signature, enabling to offload their unpacked version from the memory while keeping in memory their packed version in order to be able to unpack it for the signature generation.

Similarly, the cryptographic device may store coefficients of the second vector of polynomials $\mathbf{w1}^i$ with i in {0, ..., k-1} into a packed format after their generation at the third step. It enables to offload their unpacked version from the memory while keeping in memory their packed version for the generation of the coefficients of the fourth vector of polynomials $\mathbf{h}^i$ with i in {0, ..., k-1} at the third sub-step S53.

The following paragraphs describe in detail a first example of implementation, reproduced on **Figure 4**, in which the polynomial coefficients of the first test vector **r0**, the second test vector **z**, the first vector of polynomials **w**, the second vector of polynomials **w1**, the third vector of polynomials **w0**, the fourth vector of polynomials **h**, and the value $ct0$ are generated and/or tested one by one as described above. In addition, the coefficients of the second test vector **z**, of the fourth vector of polynomials **h** and of the second vector of polynomials **w1** are stored under a packed format as also described above.

As a preliminary step S0', the matrix A is generated from the element $\rho$ of the secret key, using the function ExpandA defined in §5.3 of "CRYSTALS-Dilithium Algorithm specifications and supporting documentation (Version 3.1)" by S. Bai, L. Ducas, E. Kiltz, T. Lepoint, V. Lyubashevsky, P. Schwabe, G. Seiler and D. Stehlé, February 2021.

This function takes as input an element called seed, $\rho$, that fits into 256 bits used as input for a pseudorandom function. Depending on the variant of the Dilithium algorithm used, the seed $\rho$ can be either used as input for the SHAKE-128 or the AES256ctr functions. In the first case, for the SKAKE-128 variant, the seed $\rho$ is absorbed followed by (i, j), representing the coefficient to be sampled, as the value $0 \leq 256i + j < 2^{16}$.

When the AES256ctr is used as a pseudorandom function the value $256i + j$ is extended, meaning padded with zeroes, to fit in a 12-bytes value, called a nonce here. The output of the pseudorandom function is interpreted as a sequence of integers between 0 and $2^{23}-1$ by setting the highest bit of every third byte to zero and interpreting blocks of 3 consecutive bytes in little endian byte order.

A value $\mu$ is generated as H($tr$||M) with H a hash function. A value $\kappa$ is set to 0.

A value $\rho'$ is generated as H(K||$\mu$) with K the second element of the secret key.

Then in a first step S1', the cryptographic device generates the masking vector **y** as ExpandMask($\rho'$, $\kappa$) defined in §5.3 of "CRYSTALS-Dilithium Algorithm specifications and supporting documentation (Version 3.1)" by S. Bai, L. Ducas, E. Kiltz, T. Lepoint, V. Lyubashevsky, P. Schwabe, G. Seiler and D. Stehlé, February 2021.

This function takes as input an element $\rho'$, that fits into 512 bits and a nonce $\kappa$, where $\kappa$ starts to 0 and is incremented of 1 at each polynomial sampled. Both inputs are passed to a pseudorandom function. Depending on the variant of the Dilithium algorithm used, the input $\rho'$ can be either used as input for the SHAKE-256 or the AES256ctr functions. In the first case, for the SKAKE-256 variant, the seed 64 bytes of $\rho'$ are concatenated with the value $\kappa + i$ represented in 2 bytes. When the AES256ctr is used as a pseudorandom function the 32 bytes of $\rho'$ are used as the key the value $\kappa + i$ is zero padded to fit into 12 bytes to be used as a nonce.

Since $\gamma 1$ is a power of 2, the output of the pseudorandom function is directly interpreted as a sequence of integers between 0 and $2\gamma_1 - 1$ by taking either 18 bits of the output or 20 bits, depending on the security level of Dilithium. We subtract the value $\gamma_1$ to obtain the desired coefficient in the interval [-$\gamma 1$, $\gamma 1$-1].

Then the cryptographic device performs iteratively a second step S2', and a third step S3'. At each iteration i, with i in {0, ..., k-1}, of the second step, it computes one coefficient $\mathbf{w^i}$ of the first vector of polynomials **w** by computing $\mathbf{w^i} = (\mathbf{Ay})^{\mathbf{i}}$. And at each iteration i with i in {0, ..., k-1} of the third step S3' following the iteration i of the second step S2', the cryptographic device determines the corresponding $i^{th}$ coefficients $\mathbf{w1^i}$ and $\mathbf{w0^i}$ of the second vector of polynomials **w1** and the third vector of polynomials **w0** corresponding to a decomposition of the first vector of polynomials **w,** by computing $\mathbf{w1^i}$, w0' = Decompose$_q$($\mathbf{w^i}$, 2 $\gamma2$). The function Decompose$_q$ is defined on **Figure 5.** Each time a coefficient $\mathbf{w1^i}$ is generated, it is packed as $\widetilde{w1}^i$ and the unpacked coefficient is offload from the memory.

In a fourth step S4', the cryptographic device generates the challenge c from the value $\mu$ which has been derived from the message M at the preliminary step S0', and from the packed coefficients of the second vector of polynomials **w1** using the function SampleInBall illustrated on **Figure 6** and the hash function H:

$$c = \text{SampleInBall}(H(\mu||\widetilde{w1^0}|| \ldots ||\widetilde{w1^{k-1}}).$$

The function SampleInBall is defined in §2.3 of "CRYSTALS-Dilithium Algorithm specifications and supporting documentation (Version 3.1)" by S. Bai, L. Ducas, E. Kiltz, T. Lepoint, V. Lyubashevsky, P. Schwabe, G. Seiler and D. Stehlé, February 2021

The "SampleInBall" routine is using the SHAKE-256 algorithm to generate a stream of random bytes from a value called seed. The first $\tau$ bits in the first 8 bytes of the random stream are interpreted as $\tau$ random sign bits in the polynomial c, and each sign bit can either be 0 or 1. The remaining 64 - $\tau$ bits are discarded. The rest of the random stream is used in a rejection sampling loop, where the next byte of the random stream from SHAKE-256 is interpreted as a number in the set {0, ... , 255}. We use the corresponding sign in order to determine if it is a 1 or a -1 value.

A packed version of the generated challenge c may be generated, as it will be needed later at the sixth step S6' for generating the signature.

Then, in order to determine if the masking vector **y** generated in the first step enables the generation of a secure signature, the cryptographic device performs iteratively the first, second and third sub-steps S51', S52' and S53' of a fifth step S5' in order to perform rejection tests on each coefficient of the first test vector **r0**, of the value *ct0* and of the fourth vector of polynomials **h.**

At each iteration i with i in {0, ..., k-1} of the first sub-step S51' of the fifth step S5', the cryptographic device generates a coefficient $\mathbf{r0^i}$ of the first test vector **r0** as $\mathbf{w0^i}$-$cs2^i$, and checks whether the infinity norm of this coefficient is lower than $\gamma2 - \beta$. The n elements of a coefficient $\mathbf{w^i}$ of the first vector of polynomials **w** are elements in $\mathbb{Z}_q$. The infinity norm of such an element is the absolute value of the representation in the interval] $-\frac{q}{2}, \frac{q}{2}$-]. For a given coefficient $\mathbf{w^i}$ in R$_q$ we define the infinity norm as the maximum value of all the infinity norms on the n elements of this coefficient.

Since the third vector of polynomials **w0** is not used anymore in subsequent steps of the signature generation process, it may be discarded from the memory at the end of the first sub-step S51' of the fifth step S5', before starting the next step.

If the tested coefficient $\mathbf{r0^i}$ of the first test vector **r0** passes its test, the cryptographic device performs then iteration i of the second sub-step S52'. At each iteration i with i in {0, ..., k-1} of the second sub-step S52', the cryptographic device checks if the infinite norm of the $i^{th}$ coefficient $ct0^i$ of the value $ct0$ is lower than $\gamma2$.

If it does, the cryptographic device performs then iteration i of the third sub-step S53'. At each iteration i with i in {0, ..., k-1} of the third sub-step S53', the cryptographic device unpacks the $i^{th}$ coefficient $\mathbf{w1}^i$ of the second vector of polynomials $\mathbf{w1}$, and computes the $i^{th}$ coefficient $\mathbf{h}^i$ of the fourth vector of polynomials $\mathbf{h}$: $\mathbf{h}^i$ = MakeHint$_q$($\mathbf{w1}^i$, $\mathbf{r0}^i$ + $ct0^i$, 2 $\gamma2$), using the MakeHint function defined on Figure 5. Then, it checks if the $i^{th}$ coefficient $\mathbf{h}^i$ of the fourth vector of polynomials $\mathbf{h}$ verifies the fourth condition : $\left| h^i \right|_{h_j^i=1} \leq \omega$ with the maximum number of coefficients equal to 1 among all $\mathbf{h}^i$. If it does, the $i^{th}$ coefficient $\mathbf{h}^i$ of the fourth vector of polynomials $\mathbf{h}$ is packed and its unpacked version is discarded from the memory.

Then, the cryptographic device performs iteration i+1 of the first sub-step S51' of the fifth step S5', for generating the next coefficient $\mathbf{r0}^{i+1}$ of the first test vector $\mathbf{r0}$. Since the coefficient $\mathbf{r0}^i$ of the first test vector $\mathbf{r0}$ used at iteration i of the third sub-step S53' is not used anymore in subsequent steps of the signature generation process, it may be discarded from the memory at the end of the iteration of the third sub-step S53', before starting the next iteration of the first sub-step S51'.

The cryptographic device performs iteratively the first sub-step S51', the second sub-step S52' and the third sub-step S53' until all coefficients of the first test vector $\mathbf{r0}$, of the value $ct0$ and of the fourth vector of polynomials $\mathbf{h}$ have been successfully tested.

Then, in a fourth sub-step S54', the cryptographic device generates one by one coefficients $\mathbf{z}^i$ with i in {0, ..., l-1} of the second test vector by computing $\mathbf{z}^i= \mathbf{y}^i + cs1^i$, and checks whether the infinite norm of each coefficient $\mathbf{z}^i$ of the second test vector $\mathbf{z}$ is lower than $\gamma1 - \beta$. After each coefficient successfully passes its test, it is packed and its unpacked version is offloaded from the memory.

If any of these tests fails, the signature generation process goes back to the first step in order to generate a new masking vector $\mathbf{y}$. Since each coefficient of the first test vector $\mathbf{r0}$, of the value $ct0$ and of the fourth vector of polynomials $\mathbf{h}$ is tested before generating any other, the computation time spent generating coefficients of these vectors before a test fails is reduced. In addition, coefficients of the second test vector $\mathbf{z}$ are not generated if any coefficient of the first test vector $\mathbf{r0}$, of the value $ct0$ or of the fourth vector of polynomials $\mathbf{h}$ fails its test. And the coefficients of the second test vector $\mathbf{z}$ are also generated and tested one by one, which ensure that no coefficient is generated before making sure that lower index coefficients all pass their test.

Finally, in the sixth step S6', when said first, second, third and fourth conditions are met, the second test vector $\mathbf{z}$ and the fourth vector of polynomials $\mathbf{h}$ may be used respectively as second and third elements of the signature to be generated and the signature is generated from said second test vector, from the packed challenge and from the fourth vector of polynomials $\mathbf{h}$. Since the coefficients of the second test vector $\mathbf{z}$ and the fourth vector of polynomials $\mathbf{h}$ have been packed, at previous steps of the method, they are unpacked for making available unpacked version of the second test vector $\mathbf{z}$ and the fourth vector of polynomials $\mathbf{h}$.

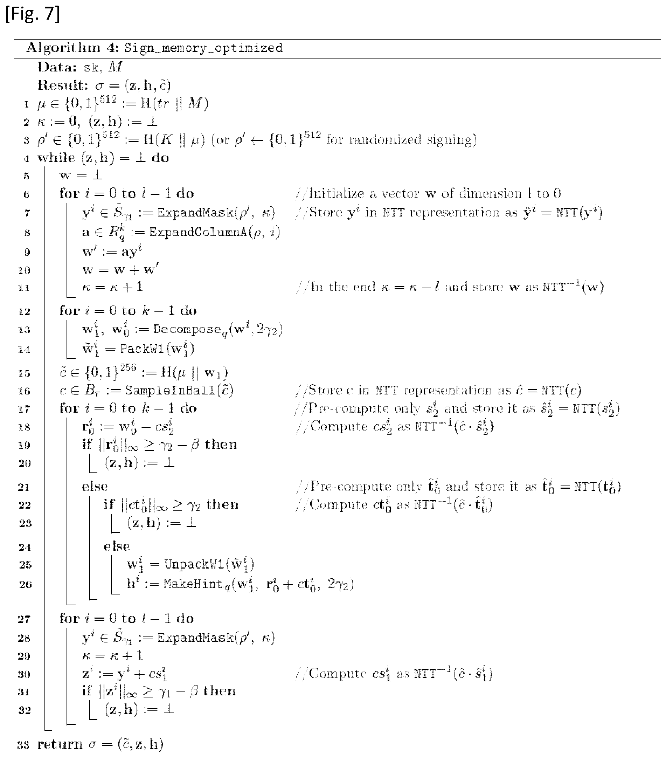

Another embodiment of the method according to the invention is presented on **Figure 7.** This embodiment differs from the previous one in the following.

First, the matrix A is not generated in full in the preliminary step S0'; and the masking vector $\mathbf{y}$ is not generated either in full in the first step S1'. Instead, in an iteration i of the first step S1', the cryptographic device generates only one coefficient $\mathbf{y}^i$ with i in {0, ... , l-1} of the masking vector $\mathbf{y}$, and only one column a of the matrix A using a function ExpandColumn similar to the ExpandA function except that it outputs only a column of the matrix. At iteration i of the second step S2', a vector $\mathbf{w'}$ whose coefficients each contain part of a coefficient of the first vector of polynomials $\mathbf{w}$ is generated by computing $\mathbf{w'}$= a*$\mathbf{y}^i$. The first and second steps are repeated l times and each generated vector $\mathbf{w'}$ is added to an accumulator $\mathbf{w}$. After the last iteration of the second step, the accumulator value is equal to the first vector of polynomials $\mathbf{w} = \mathbf{Ay}$. By doing so, the size occupied at any time in memory by only one column of the matrix A is l-times lower than the size of the matrix A.

Secondly, at the fourth step S4', the cryptographic device first generates the packed challenge $\tilde{c}$ directly from the packed coefficients $\widetilde{w1}^i$ by computing $\tilde{c} = H(\mu\|\ \widetilde{w1^0}\ ...\ \widetilde{w1^{k-1}}\ )$. Then, the unpacked challenge $c$ is computed as SampleInBall($\tilde{c}$).

Finally, a last difference is in the way the masking vector $\mathbf{y}$ is managed. In the implementation of Figure 4, the masking vector is generated in full at the first step and kept in memory for future use at the fourth sub-step S54' of the fifth step. In the implementation of Figure 7, each coefficient $\mathbf{y}^i$ with i in {0, ... , l-1} of the masking vector is discarded after computing $\mathbf{w'}$= a$\mathbf{y}^i$. The memory use is decreased from l kB for storing the full masking vector to only 1 kB for storing one coefficient of the masking vector at a time. Doing so requires to regenerate each coefficient $\mathbf{y}^i$ of the masking vector one by one in the fourth sub-step S54' of the fifth step, for computing the corresponding coefficient $\mathbf{z}^i$ of the second

test vector **z**. But this additional generation of each coefficient $y^i$ of the masking vector is not performed when a rejection occurs because of a failure of a test performed in one of the first three sub-steps of the fifth step. It is only required after all coefficients have the first test vector, of the value **ct0** and of the fourth vector of polynomials h successfully passed their tests.

In the implementation of Figure 7, the memory occupied at any time by the masking vector is minimized to 1 kB but at the cost of storing all the generated values **w'** in the accumulator in order to compute the first vector of polynomials **w**. At the end of the last iteration of the second step, this accumulator occupies k kB of memory.

In order to further minimize memory occupation, another embodiment may consist in computing one by one the coefficients $w^i$ of the first vector of polynomials **w and** immediately discard it after it has been decomposed into **w1**$^i$ and **w0**$^i$, as in the implementation of Figure 4. But, in this last embodiment, at iteration i for i in {0,... ,k-1} of the second step S2', instead of computing the coefficient $w^i$ as $(Ay)^i$, the coefficient $w^i$ may be generated by computing one by one the terms $A_{ji}*y^i$ for j in {0,... ,1-1} and summing them in an accumulator to get in the end the value $\sum_{j=0}^{l-1} A_{ji} y^j = (Ay)^i$. In order to minimize memory occupation, each coefficient $y^j$ i with j in {0, ..., l-1} may discarded after the computation of the term $A_{ji}*y^j$. By doing so, the memory stores at the same time only one coefficient $w^i$, of size 1 kB, of the first vector of polynomials **w and** one coefficient $y^j$ , of size 1 kB, of the masking vector **y**. Nevertheless, it leads to an increase of the computation time since all coefficients of the masking vector **y** have to be generated one time for each coefficient $w^i$ of the first vector of polynomials **w**, plus one last time at the fourth sub-step S54' of the fifth step, which sums up to (k+1) generations of each coefficient of the masking vector **y**.

According to a second aspect, the invention relates to a computer program product directly loadable into the memory of at least one computer, comprising software code instructions for performing, when said product is run on the computer, the steps of the methods described here before.

According to a third aspect, the invention is also related to a cryptographic device 100 comprising a processor and a memory described here before and configured for performing the steps of the methods described above.

In addition to these features, the computer program and the cryptographic device according to the second and third aspects of the invention may be configured for performing or may comprise any other features described here before.

As a result, the Crystals-Dilithium signature generation process can be performed with a much lower memory footprint, since at least the first test vector **r0** may be discarded from memory before computing the second test vector **z**. In addition, the memory footprint may be further reduced by generating and testing the test vectors one coefficient at a time; and by packing the coefficients of the second vector of polynomials **w1,** of the second test vector **z**, and of the fourth vector of polynomials **h** as soon as possible.

**Claims**

1. A method for optimizing the execution of the generation of a Crystals-Dilithium post-quantum digital signature $\sigma = (\tilde{c}, z, h)$ of a message M with a secret key sk = $(\rho, K, tr, s1, s2, t0)$ where $\rho$, K, *tr* are 256 bits binary values, *s1* and *s2* are vectors of length l, respectively k, of elements of the ring Rq whose coefficients are lower than a first predetermined value $\eta$, and **t0** is a polynomial vector of length k with k, l, n and q integers,

   said Crystals-Dilithium post-quantum digital signature generation comprising :

      a) generating (S1) a masking vector **y**, of length l, of polynomials with coefficients less than a second predetermined value $\gamma1$,
      b) computing (S2) a first vector of polynomials, of length k, **w = Ay,** where **A** is a k $\times$ l matrix each of whose entries is a polynomial in the ring Rq = Zq[X]/(Xn + 1),
      c) determining (S3) a second vector of polynomials **w1** and a third vector of polynomials **w0,** both of length k, where every polynomial coefficient $w^i$ in **Ay,** with i in 0, ..., k-1, is written as $w^i = w1^i . 2\gamma2 + w0^i$ where $|w0^i| \leq \gamma2$ with $\gamma2$ a third predetermined value,
      d) generating (S4) a challenge c based on the message and the second vector of polynomials **w1,**
      e) performing rejection tests (S5) comprising testing if test vectors generated from said vectors, said challenge and said secret key fulfill predetermined conditions,

   and when said conditions are not fulfilled, restarting the signature generation from step a), else generating said signature (S6),
   the steps a), b), c), d), and e) being repeated until the conditions are satisfied,

said method being performed by a cryptographic device (100) comprising a processor (101) and a memory (103), wherein performing rejection tests (S5) comprises:

- following said determination of said third vector of polynomials **w0,** generating a first test vector **r0** as **w0**-*cs2*, and checking whether said first test vector **r0** fulfills a first condition (S51),
- when said first condition is met, generating a second test vector **z= y** + *cs1*, and checking whether said second test vector **z** fulfills a second condition (S54),

and wherein, when said second condition is met, said signature is generated (S6) from said second test vector.

2. The method of claim 1, wherein generating either said first or second test vector and checking whether said test vector fulfills a condition comprises generating polynomial coefficients of said test vector one by one and comprises, after one polynomial coefficient of said vector has been generated, checking whether said polynomial coefficient fulfills a condition before generating next polynomial coefficient of said test vector.

3. The method of claim 2, comprising storing coefficients of the second test vector $z^i$ fulfilling the second condition into a packed format before using them for the generation of the signature.

4. The method of claim 2, comprising storing coefficients of the second vector of polynomials $w1^i$ into a packed format after their generation.

5. The method of any one of claim 1 to 4, wherein n=256 and q=2^23-2^13 +1.

6. A computer program product directly loadable into the memory of at least one computer, comprising software code instructions for performing the steps of any one of claim 1 to 5 when said product is run on the computer.

7. A cryptographic device (100) comprising a processor (101) and a memory (103) configured for performing the steps of any one of claim 1 to 5.

[Fig. 1]

100

Input/Output
Interface
107

Coprocessor
108

Communication
Interface
106

102

Processor
101

ROM
104

RAM
103

NVM
105

[Fig. 2]

<u>Gen</u>

$\zeta \leftarrow \{0,1\}^{256}$

$(\rho, \rho', K) \in \{0,1\}^{256} \times \{0,1\}^{512} \times \{0,1\}^{256} := H(\zeta)$     $\triangleright$ H is instantiated as SHAKE-256

$\mathbf{A} \in R_q^{k \times \ell} := \mathsf{ExpandA}(\rho)$     $\triangleright$ $\mathbf{A}$ is generated and stored in NTT Representation as $\hat{\mathbf{A}}$

$(\mathbf{s}_1, \mathbf{s}_2) \in S_\eta^\ell \times S_\eta^k := \mathsf{ExpandS}(\rho')$

$\mathbf{t} := \mathbf{As}_1 + \mathbf{s}_2$     $\triangleright$ Compute $\mathbf{As}_1$ as $\mathrm{NTT}^{-1}(\hat{\mathbf{A}} \cdot \mathrm{NTT}(\mathbf{s}_1))$

$(\mathbf{t}_1, \mathbf{t}_0) := \mathsf{Power2Round}_q(\mathbf{t}, d)$

$tr \in \{0,1\}^{256} := H(\rho \parallel \mathbf{t}_1)$

**return** $(pk = (\rho, \mathbf{t}_1), sk = (\rho, K, tr, \mathbf{s}_1, \mathbf{s}_2, \mathbf{t}_0))$


<u>Sign</u>$(sk, M)$

$\mathbf{A} \in R_q^{k \times \ell} := \mathsf{ExpandA}(\rho)$     $\triangleright$ $\mathbf{A}$ is generated and stored in NTT Representation as $\hat{\mathbf{A}}$

$\mu \in \{0,1\}^{512} := H(tr \parallel M)$

$\kappa := 0, (\mathbf{z}, \mathbf{h}) := \perp$

$\rho' \in \{0,1\}^{512} := H(K \parallel \mu)$ (or $\rho' \leftarrow \{0,1\}^{512}$ for randomized signing)

**while** $(\mathbf{z}, \mathbf{h}) = \perp$ **do**     $\triangleright$ Pre-compute $\hat{\mathbf{s}}_1 := \mathrm{NTT}(\mathbf{s}_1)$, $\hat{\mathbf{s}}_2 := \mathrm{NTT}(\mathbf{s}_2)$, and $\hat{\mathbf{t}}_0 := \mathrm{NTT}(\mathbf{t}_0)$

     $\mathbf{y} \in \tilde{S}_{\gamma_1}^\ell := \mathsf{ExpandMask}(\rho', \kappa)$

     $\mathbf{w} := \mathbf{Ay}$     $\triangleright$ $\mathbf{w} := \mathrm{NTT}^{-1}(\hat{\mathbf{A}} \cdot \mathrm{NTT}(\mathbf{y}))$

     $\mathbf{w}_1 := \mathsf{HighBits}_q(\mathbf{w}, 2\gamma_2)$

     $\tilde{c} \in \{0,1\}^{256} := H(\mu \parallel \mathbf{w}_1)$

     $c \in B_\tau := \mathsf{SampleInBall}(\tilde{c})$     $\triangleright$ Store $c$ in NTT representation as $\hat{c} = \mathrm{NTT}(c)$

     $\mathbf{z} := \mathbf{y} + c\mathbf{s}_1$     $\triangleright$ Compute $c\mathbf{s}_1$ as $\mathrm{NTT}^{-1}(\hat{c} \cdot \hat{\mathbf{s}}_1)$

     $\mathbf{r}_0 := \mathsf{LowBits}_q(\mathbf{w} - c\mathbf{s}_2, 2\gamma_2)$     $\triangleright$ Compute $c\mathbf{s}_2$ as $\mathrm{NTT}^{-1}(\hat{c} \cdot \hat{\mathbf{s}}_2)$

     **if** $\|\mathbf{z}\|_\infty \geq \gamma_1 - \beta$ **or** $\|\mathbf{r}_0\|_\infty \geq \gamma_2 - \beta$, **then** $(\mathbf{z}, \mathbf{h}) := \perp$

     **else**

        $\mathbf{h} := \mathsf{MakeHint}_q(-c\mathbf{t}_0, \mathbf{w} - c\mathbf{s}_2 + c\mathbf{t}_0, 2\gamma_2)$     $\triangleright$ Compute $c\mathbf{t}_0$ as $\mathrm{NTT}^{-1}(\hat{c} \cdot \hat{\mathbf{t}}_0)$

        **if** $\|c\mathbf{t}_0\|_\infty \geq \gamma_2$ **or** the # of 1's in $\mathbf{h}$ is greater than $\omega$, **then** $(\mathbf{z}, \mathbf{h}) := \perp$

     $\kappa := \kappa + \ell$

**return** $\sigma = (\tilde{c}, \mathbf{z}, \mathbf{h})$


<u>Verify</u>$(pk, M, \sigma = (\tilde{c}, \mathbf{z}, \mathbf{h}))$

$\mathbf{A} \in R_q^{k \times \ell} := \mathsf{ExpandA}(\rho)$     $\triangleright$ $\mathbf{A}$ is generated and stored in NTT Representation as $\hat{\mathbf{A}}$

$\mu \in \{0,1\}^{512} := H(H(\rho \parallel \mathbf{t}_1) \parallel M)$

$c := \mathsf{SampleInBall}(\tilde{c})$

$\mathbf{w}_1' := \mathsf{UseHint}_q(\mathbf{h}, \mathbf{Az} - c\mathbf{t}_1 \cdot 2^d, 2\gamma_2)$ $\triangleright$ Compute as $\mathrm{NTT}^{-1}(\hat{\mathbf{A}} \cdot \mathrm{NTT}(\mathbf{z}) - \mathrm{NTT}(c) \cdot \mathrm{NTT}(\mathbf{t}_1 \cdot 2^d))$

**return** $[\![\|\mathbf{z}\|_\infty < \gamma_1 - \beta]\!]$ **and** $[\![\tilde{c} = H(\mu \parallel \mathbf{w}_1')]\!]$ **and** $[\![\text{\# of 1's in } \mathbf{h} \text{ is } \leq \omega]\!]$

[Fig. 3a]

S1 — Generating a masking vector y

S2 — Computing a first vector of polynomials **w = Ay**

S3 — Determining a second vector of polynomials w1 and a third vector of polynomials w0

S4 — Generating a challenge c

S5 — *Performing rejection tests : Figure 3b*
Generating and testing if a first test vector **r0** fulfills a predetermined first condition
and then generating and checking if a second test vector **z** fulfills a predetermined second condition only after the first test vector **r0** has successfully passed its test

All Conditions fulfilled ? — No

yes

S6 — Generating signature

[Fig. 3b]

S5

Generating a first test vector **r0** as **w0**-*cs2*, and checking whether the first test vector **r0** fulfills a first condition

S51

Is first condition met ? — No

yes

Checking whether the value *ct0* fulfills a third condition

S52

Is third condition met ? — No

yes

Generating a fourth vector of polynomials **h** and checking whether the fourth vector of polynomials **h** fulfills a fourth condition

⊢⇒S1

S53

Is fourth condition met ? — No

yes

Generating a second test vector **z**= **y** + *cs1*, and checking whether the second test vector **z** fulfills a second condition

S54

Is second condition met ? — No

yes

Generating signature

S6

[Fig. 4]

S0'
$$A \in R_q^{k \times l} := \text{ExpandA}(\rho)$$
$$\mu \in \{0,1\}^{512} := H(tr\|M)$$
$$K := 0, (z,h) := \perp$$
$$\rho' \in \{0,1\}^{512} := H(K\|\mu)(\text{or } \rho' \leftarrow \{0,1\}^{512} \text{ for randomized signing})$$

while $(z,h) = \perp$ do

S1'
$$y \in \widetilde{S}_{y1} := \text{ExpandMask}(\rho', K)$$

$$K = K + 1$$
for $i = 0$ to $k - 1$:

S2'
$$w^i = (Ay)^i$$

S3'
$$w_1^i, w_0^i = \text{Decompose}_q(w^i, 2\gamma_2)$$

$$\widetilde{w}_1^i = \text{PackW1}(w_1^i)$$

S4'
$$c = \text{SampleInBall}(H(\mu\| \widetilde{w}_1^0 \|...\| \widetilde{w}_1^{k-1}))$$

for $i = 0$ to $k - 1$:

S51'
$$r_0^i = w_0^i - c\, s_2^i$$
if $\|r_0^i\|_\infty \geq \gamma_2 - \beta: (z,h) = \perp$

S52'
if $\|ct_0^i\|_\infty \geq \gamma_2 : (z,h) = \perp$

S5'
$$w_1^i = \text{UnpackW1}(\widetilde{w}_1^i)$$
$$h^i = \text{MakeHint}_q(w_1^i, r_0^i + ct_0^i, 2\gamma_2)$$
S53'
if $|h^i|_{h_j^i = 1} > \omega : (z,h) = \perp$
$$\text{PackH}(h^i)$$

for $i = 0$ to $l - 1$:

S54'
$$z^i = y^i + c\, s_1^i$$
if $\|z^i\|_\infty \geq \gamma_1 - \beta: (z,h) = \perp$
$$\text{PackZ}(z^i)$$

S6'
$$\text{return } \sigma = (\widetilde{c}, z, h)$$

[Fig. 5]

$\underline{\text{Power2Round}_q(r, d)}$

$r := r \bmod^{+} q$

$r_0 := r \bmod^{\pm} 2^d$

$\textbf{return } \left((r - r_0)/2^d, r_0\right)$

$\underline{\text{MakeHint}_q(z, r, \alpha)}$

$r_1 := \text{HighBits}_q(r, \alpha)$

$v_1 := \text{HighBits}_q(r + z, \alpha)$

$\textbf{return } [\![r_1 \neq v_1]\!]$

$\underline{\text{UseHint}_q(h, r, \alpha)}$

$m := (q - 1)/\alpha$

$(r_1, r_0) := \text{Decompose}_q(r, \alpha)$

$\textbf{if } h = 1 \text{ and } r_0 > 0 \textbf{ return } (r_1 + 1) \bmod^{+} m$

$\textbf{if } h = 1 \text{ and } r_0 \leq 0 \textbf{ return } (r_1 - 1) \bmod^{+} m$

$\textbf{return } r_1$

$\underline{\text{Decompose}_q(r, \alpha)}$

$r := r \bmod^{+} q$

$r_0 := r \bmod^{\pm} \alpha$

$\textbf{if } r - r_0 = q - 1$

$\quad \textbf{then } r_1 := 0; \; r_0 := r_0 - 1$

$\textbf{else } r_1 := (r - r_0)/\alpha$

$\textbf{return } (r_1, r_0)$

$\underline{\text{HighBits}_q(r, \alpha)}$

$(r_1, r_0) := \text{Decompose}_q(r, \alpha)$

$\textbf{return } r_1$

$\underline{\text{LowBits}_q(r, \alpha)}$

$(r_1, r_0) := \text{Decompose}_q(r, \alpha)$

$\textbf{return } r_0$

[Fig. 6]

$\underline{\text{SampleInBall}(\rho)}$

$\textbf{Initialize } \mathbf{c} = c_0 c_1 \ldots c_{255} = 00 \ldots 0$

$\textbf{for } i := 256 - \tau \textbf{ to } 255$

$\quad j \leftarrow \{0, 1, \ldots, i\}$

$\quad s \leftarrow \{0, 1\}$

$\quad c_i := c_j$

$\quad c_j := (-1)^s$

$\textbf{return } \mathbf{c}$

[Fig. 7]

---

**Algorithm 4: Sign_memory_optimized**

**Data:** sk, $M$

**Result:** $\sigma = (\mathbf{z}, \mathbf{h}, \tilde{c})$

$\mu \in \{0,1\}^{512} := \mathrm{H}(tr \parallel M)$

$\kappa := 0, \ (\mathbf{z}, \mathbf{h}) := \bot$

$\rho' \in \{0,1\}^{512} := \mathrm{H}(K \parallel \mu)$ (or $\rho' \leftarrow \{0,1\}^{512}$ for randomized signing)

**while** $(\mathbf{z}, \mathbf{h}) = \bot$ **do**

  $\mathbf{w} = \bot$

  **for** $i = 0$ **to** $l - 1$ **do**         //Initialize a vector $\mathbf{w}$ of dimension l to 0

    $\mathbf{y}^i \in \tilde{S}_{\gamma_1} := \mathtt{ExpandMask}(\rho', \ \kappa)$   //Store $\mathbf{y}^i$ in NTT representation as $\hat{\mathbf{y}}^i = \mathtt{NTT}(\mathbf{y}^i)$

    $\mathbf{a} \in R_q^k := \mathtt{ExpandColumnA}(\rho, \ i)$

    $\mathbf{w}' := \mathbf{a}\mathbf{y}^i$

    $\mathbf{w} = \mathbf{w} + \mathbf{w}'$

    $\kappa = \kappa + 1$         //In the end $\kappa = \kappa - l$ and store $\mathbf{w}$ as $\mathtt{NTT}^{-1}(\mathbf{w})$

  **for** $i = 0$ **to** $k - 1$ **do**

    $\mathbf{w}_1^i, \ \mathbf{w}_0^i := \mathtt{Decompose}_q(\mathbf{w}^i, 2\gamma_2)$

    $\tilde{\mathbf{w}}_1^i = \mathtt{PackW1}(\mathbf{w}_1^i)$

  $\tilde{c} \in \{0,1\}^{256} := \mathrm{H}(\mu \parallel \mathbf{w}_1)$

  $c \in B_\tau := \mathtt{SampleInBall}(\tilde{c})$     //Store c in NTT representation as $\hat{c} = \mathtt{NTT}(c)$

  **for** $i = 0$ **to** $k - 1$ **do**     //Pre-compute only $s_2^i$ and store it as $\hat{s}_2^i = \mathtt{NTT}(s_2^i)$

    $\mathbf{r}_0^i := \mathbf{w}_0^i - cs_2^i$         //Compute $cs_2^i$ as $\mathtt{NTT}^{-1}(\hat{c} \cdot \hat{s}_2^i)$

    **if** $\|\mathbf{r}_0^i\|_\infty \geq \gamma_2 - \beta$ **then**

      $(\mathbf{z}, \mathbf{h}) := \bot$

    **else**         //Pre-compute only $\hat{t}_0^i$ and store it as $\hat{t}_0^i = \mathtt{NTT}(t_0^i)$

      **if** $\|ct_0^i\|_\infty \geq \gamma_2$ **then**     //Compute $ct_0^i$ as $\mathtt{NTT}^{-1}(\hat{c} \cdot \hat{t}_0^i)$

        $(\mathbf{z}, \mathbf{h}) := \bot$

      **else**

        $\mathbf{w}_1^i = \mathtt{UnpackW1}(\tilde{\mathbf{w}}_1^i)$

        $\mathbf{h}^i := \mathtt{MakeHint}_q(\mathbf{w}_1^i, \ \mathbf{r}_0^i + ct_0^i, \ 2\gamma_2)$

  **for** $i = 0$ **to** $l - 1$ **do**

    $\mathbf{y}^i \in \tilde{S}_{\gamma_1} := \mathtt{ExpandMask}(\rho', \ \kappa)$

    $\kappa = \kappa + 1$

    $\mathbf{z}^i := \mathbf{y}^i + cs_1^i$         //Compute $cs_1^i$ as $\mathtt{NTT}^{-1}(\hat{c} \cdot \hat{s}_1^i)$

    **if** $\|\mathbf{z}^i\|_\infty \geq \gamma_1 - \beta$ **then**

      $(\mathbf{z}, \mathbf{h}) := \bot$

**return** $\sigma = (\tilde{c}, \mathbf{z}, \mathbf{h})$

---

Europäisches
Patentamt

European
Patent Office

Office européen
des brevets

# EUROPEAN SEARCH REPORT

**Application Number**

EP 23 30 5221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Bai Shi ET AL: "CRYSTALS-Dilithium Algorithm Specifications and Supporting Documentation (Version 3.1)", , 8 February 2021 (2021-02-08), pages 1-38, XP093020615, Retrieved from the Internet: URL:https://pq-crystals.org/dilithium/data /dilithium-specification-round3-20210208.p df [retrieved on 2023-02-03] * sections 1, 5.8 and 5.1; figure 4 * | 1-7 | INV. H04L9/32 H04L9/30 |
| X | BOS JOPPE W ET AL: "Dilithium for Memory Constrained Devices", 6 October 2022 (2022-10-06), 20221006, PAGE(S) 217 - 235, XP047635745, [retrieved on 2022-10-06] * sections 2 and 3.2; figure 1 * | 1-7 | |
| A | RAVI PRASANNA ET AL: "Improving Speed of Dilithium's Signing Procedure", 9 March 2020 (2020-03-09), 16TH EUROPEAN CONFERENCE – COMPUTER VISION – ECCV 2020, CORNELL UNIVERSITY LIBRARY, 201 OLIN LIBRARY CORNELL UNIVERSITY ITHACA, NY 14853, PAGE(S) 57 - 73, XP047545437, [retrieved on 2020-03-09] * page 62 * | 2 | **TECHNICAL FIELDS SEARCHED (IPC)** H04L |

-/--

The present search report has been drawn up for all claims

| Place of search | Date of completion of the search | Examiner |
|---|---|---|
| Munich | 20 July 2023 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 23 30 5221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DAAN SPRENKELS ET AL: "Don't throw your nonces out with the bathwater: Speeding up Dilithium by reusing the tail of y", IACR, INTERNATIONAL ASSOCIATION FOR CRYPTOLOGIC RESEARCH , vol. 20211216:094108 16 December 2021 (2021-12-16), pages 1-13, XP061069773, Retrieved from the Internet: URL:https://eprint.iacr.org/2020/1158.pdf [retrieved on 2021-12-16] * section 3 * ----- | 1-7 | |

TECHNICAL FIELDS SEARCHED (IPC)

The present search report has been drawn up for all claims

| Place of search | Date of completion of the search | Examiner |
|---|---|---|
| Munich | 20 July 2023 | Manet, Pascal |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. BAI ; L. DUCAS ; E. KILTZ ; T. LEPOINT ; V. LYUBASHEVSKY ; P. SCHWABE ; G. SEILER ; D. STEHLÉ.** *CRYSTALS-Dilithium Algorithm specifications and supporting documentation (Version 3.1),* February 2021